# FASCICULE DE BREVET EUROPEEN

(11) **EP 3 109 083 B1**
(45) Date de publication et mention de la délivrance du brevet: **30.05.2018**
(21) Numéro de dépôt: 16172524.7
(22) Date de dépôt: 01.06.2016
(51) Int. Cl.: B60K 11/08, B62D 35/00

(54) **DISPOSITIF D'OBTURATION D'UNE ENTRÉE D'AIR ET MODULE DE FACE AVANT ASSOCIÉ**
ABDECKVORRICHTUNG FÜR LUFTEINLASS, UND ENTSPRECHENDES FRONTMODUL
DEVICE FOR SEALING AN AIR INLET AND ASSOCIATED FRONT PANEL MODULE

(30) Priorité: 26.06.2015 FR 1555915
(43) Date de publication de la demande: 28.12.2016
(73) Titulaire: VALEO SYSTEMES THERMIQUES, 78320 Le Mesnil Saint-Denis (FR)
(72) Inventeur: THULLIER, Christophe, 78180 MONTIGNY-LE-BRETONNEUX (FR)
(74) Mandataire: Tran, Chi-Hai

(56) Documents cités:
- EP-A1- 2 371 602
- WO-A2-2012/158512
- DE-A1- 3 019 599
- DE-A1- 3 435 700
- DE-A1- 4 304 336
- JP-U- S5 825 227
- US-A- 4 457 558
- US-A1- 2014 076 645

## Description

La présente invention concerne un dispositif d'obturation d'une entrée d'air et un module de face avant associé pour véhicule automobile.

L'invention s'applique notamment à des véhicules automobiles en particulier avec une installation de conditionnement d'air de l'habitacle comme par exemple une installation de traitement thermique pour véhicule automobile, c'est-à-dire des installations ayant notamment pour fonction de chauffer, de refroidir, de filtrer et/ou déshumidifier l'air injecté dans l'habitacle, ou encore des installations de conditionnement d'air pour des fonctions de confort pour par exemple purifier, humidifier ou odoriser l'air de l'habitacle d'un véhicule.

De façon générale, un véhicule automobile présente sur sa face avant une grille d'aération derrière laquelle sont installés un ou plusieurs échangeurs de chaleur d'une installation de conditionnement thermique d'air de l'habitacle.

Toutefois, par temps froid, l'air entrant dans le compartiment moteur ralentit la montée en température du moteur thermique et prolonge la phase initiale polluante de celui-ci. De plus, ceci ralentit également la chauffe de l'habitacle, alors que les passagers à bord du véhicule ont justement besoin d'une chauffe rapide par temps froid.

Pour pallier ce problème, il est connu d'équiper le véhicule d'un système d'obturation disposé entre la grille d'aération et les échangeurs. Un tel système d'obturation est par exemple équipé d'une multitude de volets pivotants qui peuvent se déplacer entre une position ouverte, parallèle au flux d'air entrant et une position fermée, perpendiculaire au flux d'air. Ainsi, par temps froid, on peut fermer les volets ce qui permet de chauffer plus vite le moteur ainsi que l'habitacle, et puis ouvrir ces volets en fonction des besoins de refroidissement du moteur et ou de l'habitacle. Pour certains modèles de véhicule, en particulier tout-terrain, les volets sont munis de joints d'étanchéité pour permettre de rendre le compartiment moteur étanche vis-à-vis de l'extérieur, en particulier pour un passage à gué.

Bien que ces systèmes connus d'obturation ont fait leur preuve, on essaie d'éviter d'équiper un véhicule d'un tel système, notamment à cause de l'encombrement d'un tel système dans le sens longitudinal du véhicule, également appelé l'axe x. Le document JP S58 25227 U décrit un dispositif selon le préambule de la revendication 1.

Le document US 2 783 978 décrit de façon schématique une peau de pare-chocs pour véhicule automobile comportant une ouverture d'entrée d'air et un obturateur de cette ouverture.

Toutefois, pour développer des forces nécessaires pour l'ouverture et la fermeture de l'obturateur, notamment lors du roulage où des forces d'air importantes impactent l'obturateur, l'obturateur comprend des appendices latéraux avec un axe de pivotement distant pour former levier, ayant un encombrement trop important.

De plus, on a également observé que la construction d'un obturateur selon les schémas décrits dans un des documents ci-dessus ne permet que difficilement de maîtriser une ouverture intempestive de l'obturateur.

La présente invention vise à pallier au moins partiellement certains des inconvénients décrits ci-dessus.
A cet effet, l'invention a pour objet un dispositif d'obturation d'une entrée d'air pour véhicule automobile selon la revendication 1. Du fait que l'axe de pivotement peut être agencé très près de l'obturateur, on réduit l'encombrement selon l'axe longitudinal d'un véhicule automobile. De plus, les obturateurs peuvent être intégrés en particulier dans la peau externe du module de face avant réduisant également l'encombrement.

Le dispositif d'obturation selon l'invention peut comporter une ou plusieurs des caractéristiques suivantes prises seules ou en combinaison :
Selon un aspect, l'axe rotatif de commande est parallèle à l'axe de pivotement.

Selon un autre aspect, le dispositif comprend au moins un mécanisme bielle-manivelle raccordant l'axe rotatif de commande à l'obturateur de sorte qu'une rotation de l'axe rotatif de commande déplace l'obturateur en pivotement.

En utilisant un axe rotatif de commande et un mécanisme bielle-manivelle, on peut être très compact et on dispose d'une grande liberté de design pour placer l'axe rotatif de commande en fonction du véhicule sur lequel le module de face avant doit être monté. Enfin, le mécanisme bielle-manivelle permet d'assurer une bonne transmission de force pour déplacer l'obturateur associé.
Au moins un mécanisme bielle-manivelle peut être disposé de façon centrée par rapport à l'obturateur.

Ledit mécanisme bielle-manivelle est par exemple orienté perpendiculairement à l'axe de pivotement de l'obturateur et à l'axe rotatif de commande.

L'obturateur possède en particulier une forme galbée vers l'extérieur et des tourillons latéraux définissant l'axe de pivotement de l'obturateur.

Selon encore un autre aspect, la bielle du mécanisme bielle-manivelle est reliée à un palier disposé à distance de l'axe de pivotement de l'obturateur.

On peut prévoir que le mécanisme bielle-manivelle est configuré de manière à bloquer l'ouverture de l'obturateur en position fermée.

En position de fermeture de l'obturateur, la manivelle du mécanisme bielle-manivelle est par exemple perpendiculaire à l'obturateur.

L'obturateur peut posséder une largeur comprise entre 0,6m et 1m et une hauteur comprise entre 10cm et 15cm.

Selon l'invention, le dispositif comprend deux obturateurs destiné à fermer une ouverture d'entrée d'air et les obturateurs sont entraînés par l'intermédiaire de leurs axes rotatifs de commande respectifs dans des sens de pivotement antagonistes.

L'invention concerne de plus un module de face avant pour véhicule automobile comportant
- une peau externe destinée à être montée perpendiculairement à l'axe longitudinal du véhicule, à être visible de l'extérieur du véhicule et présentant une ouverture d'entrée d'air,
- au moins dispositif d'obturation selon l'une quelconque des revendications 1 à 10 ayant au moins un obturateur de l'ouverture d'entrée d'air, qui en position de fermeture assurent une continuité de surface avec ladite peau externe.

Selon encore un autre aspect, au moins un des bords d'un des obturateurs, destiné à être en vis-à-vis du bord de l'autre obturateur présente une lèvre élastique.

La lèvre élastique est réalisée par exemple en élastomère, caoutchouc ou mousse.

La lèvre élastique peut être fixée sur le bord de l'obturateur par collage, encliquetage ou surmoulage.

Selon un aspect, la lèvre élastique présente une section transversale tronconique dont la base est visible de l'extérieur.

La lèvre élastique assure en particulier une continuité de surface entre les deux obturateurs en position fermée.

Selon une variante, le pourtour périphérique de chaque obturateur est équipé d'une lèvre élastique.

D'autres avantages et caractéristiques apparaîtront à la lecture de la description de l'invention, ainsi que des dessins annexés sur lesquels :
- la figure 1 est une vue schématique en perspective d'un module de face avant équipé d'obturateurs qui sont en position fermée,
- la figure 2 est une vue schématique en perspective d'un module de face avant équipé d'obturateurs qui sont en position ouverte,
- la figure 3 est une vue schématique en perspective de l'arrière de deux obturateurs avec leur mécanisme d'entraînement respectif,
- la figure 4 est une vue schématique de côté d'un obturateur avec son mécanisme d'entraînement associé,
- la figure 5 montre deux obturateurs de face en position fermée, et
- la figure 6 montre un détail VI de la figure 5.

Dans la présente description, on entend par « en amont » qu'un élément est placé avant un autre par rapport au sens de circulation du flux d'air. A contrario, on entend par « en aval » qu'un élément est placé après un autre par rapport au sens de circulation du flux d'air. Par supérieur, inférieur, haut et bas, on se réfère à la disposition des éléments sur les figures, ce qui correspond généralement à la disposition des éléments à l'état monté dans un véhicule automobile.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Un trièdre LTH sur une figure indique respectivement les directions longitudinale (L), transversale (T) et la hauteur (H) correspondant à des directions x-y-z du véhicule.

Dans la description, on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps.

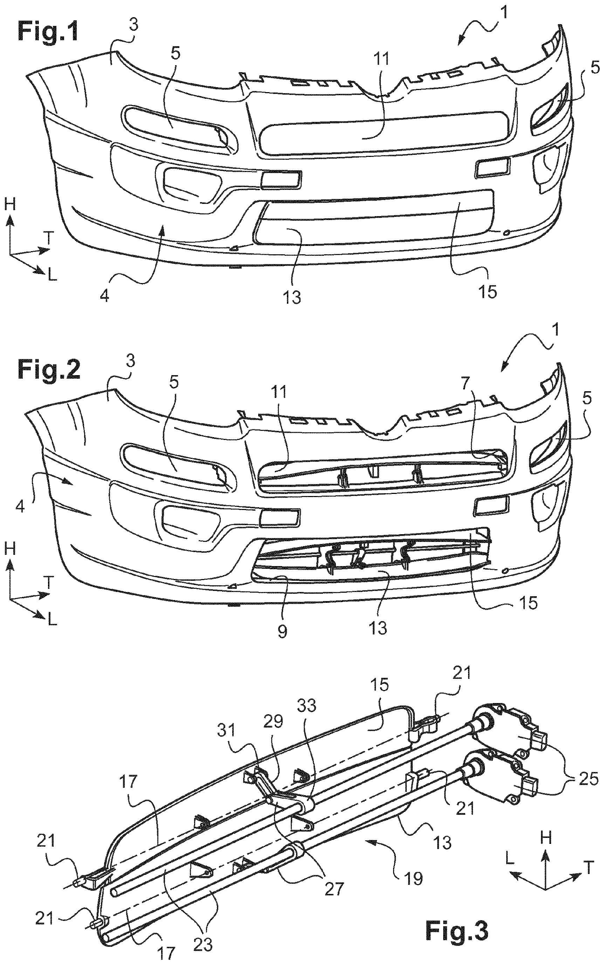

Les figures 1 et 2 montrent un module de face avant 1 pour véhicule automobile destiné à être monté sur l'avant du véhicule.

Ce module de face avant 1 comporte une peau externe 3 réalisée par exemple en matière plastique par injection ou moulage, et destinée à être montée perpendiculairement à l'axe longitudinal L du véhicule et parallèlement à l'axe transversal T du véhicule.

Cette peau externe 3 avec sa face frontale 4 est visible de l'extérieur du véhicule et a aussi bien des fonctions de décoration / finition pour souligner l'aspect du véhicule que des fonctions techniques par exemple pour amortir un choc en cas d'impact par exemple lors d'un accident.

Cette peau externe 3 présente par exemple des ouvertures 5 pour recevoir des phares, clignotants ou autres dispositifs d'éclairage ou de signalisation qui ne sont pas représentés sur les figures.

De plus, la peau externe 3 présente au moins une, dans le présent cas deux ouvertures ou entrées d'air 7 et 9 notamment d'orientation transversale (mieux visible sur la figure 2). Autrement dit, les ouvertures 7,9 d'entrée d'air correspondent à des découpes réalisées au sein de la carrosserie permettant à un flux d'air de pénétrer à l'intérieur du véhicule et notamment au sein du compartiment moteur. Toutefois l'invention ne se limite pas à la seule obturation d'entrée d'air réalisé au sein de la carrosserie. En effet, nous pouvons envisager un tel dispositif d'obturation pour un cadre appartenant au système de guidage d'air (couramment appelé AGS de l'anglais « Air Guiding System ») agencé au sein du module de la face avant.

Le module de face avant 1 comporte un dispositif d'obturation comprenant un premier obturateur 11 ainsi qu'un deuxième et troisième obturateurs respectivement référencés 13 et 15. Comme cela sera décrit plus en détail, chaque obturateur 11, 13 et 15 est mobile en pivotement autour d'un axe de pivotement 17 et peut aussi être désigné comme volet. A titre d'exemple, chaque obturateur 11, 13 et 15 est orienté transversalement au véhicule et possède une largeur comprise entre 0,6m et 1m et une hauteur comprise entre 10cm et 15cm. De même, à titre d'exemple, l'ouverture d'entrée d'air est également orientée transversalement au véhicule de manière à être obturée par le dispositif d'obturation. On comprend donc que le module de face avant, et notamment la carrosserie ou bouclier, forme pour le dispositif d'obturation un cadre de montage. Selon une variante non représentée, on peut prévoir un cadre de montage distinct du module de face avant qui se fixe à un élément de face avant ou à une structure portante du véhicule.

L'ouverture 7 peut être fermée par l'obturateur 11 tandis que l'ouverture 9, qui est plus grande en direction H, peut être fermée par les deux obturateurs 13 et 15 qui s'ouvrent ou se ferment en étant entrainés par un mouvement de pivotement selon des mouvements antagonistes.

Les obturateurs 11, 13 et 15 sont donc mobiles en pivotement entre d'une part une position de fermeture (figure 1) dans laquelle les obturateurs 11, 13 et 15 empêchent l'air de passer et dans laquelle les obturateurs 11, 13 et 15 assurent une continuité de surface avec ladite peau externe 3 et d'autre part une position escamotée (figure 2) dans laquelle l'air peut passer par les ouvertures d'entrée d'air 7 et 9. Bien entendu, les obturateurs 11, 13 et 15 peuvent aussi prendre des positions intermédiaires entre les positions fermée de la figure 1 et ouverte de la figure 2.

En particulier pour assurer la continuité de surface avec la peau externe 3 du module 1, chaque obturateur 11, 13 et 15 possède une forme galbée vers l'extérieur, c'est-à-dire en direction de l'avant du véhicule.

La figure 3 montre les obturateurs 13 et 15 sur la face aval 19, c'est-à-dire la face dirigée vers le compartiment moteur du véhicule.

A leurs extrémités transversales, chaque obturateur 11, 13 et 15 porte des tourillons latéraux 21 définissant l'axe de pivotement 17 de l'obturateur.

En outre, le dispositif d'obturation comporte pour chaque volet un axe rotatif de commande 23 qui est décalé de l'axe de pivotement 17 de l'obturateur associé et parallèle à cet axe de pivotement 17.

Selon l'exemple montré sur la figure 3, chaque obturateur 13 et 15 est associé à un actionneur d'entraînement 25 qui est disposé à une extrémité de l'axe rotatif de commande 23 concerné.

Selon un exemple non représenté, on peut prévoir un seul actionneur d'entraînement 25 avec des engrenages adaptés pour entraîner simultanément deux axes rotatifs de commande 23.

Toutefois, il est préférable d'avoir un actionneur 25 pour chacun des obturateurs 11, 13 et 15 pour pouvoir les déplacer en pivotement indépendamment les uns des autres, ce qui permet de réguler plus finement le débit d'air en fonction des conditions climatiques d'une part et des besoins en air frais de l'installation de conditionnement d'air d'autre part.

Chaque axe rotatif de commande 23 est raccordé par au moins un mécanisme bielle-manivelle 27 à l'obturateur associé 11, 13 ou 15 de sorte qu'une rotation de l'axe rotatif de commande 23 par l'intermédiaire de l'actionneur d'entrainement 25 déplace l'obturateur 11, 13 ou 15 en pivotement.

Pour optimiser les prises de force, au moins un mécanisme bielle-manivelle 27 est disposé de façon centrée par rapport à l'obturateur associé 11, 13 ou 15 et est orienté perpendiculairement à l'axe de pivotement 17 de l'obturation 11, 13 ou 15 et à l'axe rotatif de commande 23.

Plus en détail, le mécanisme bielle-manivelle 27 présente une bielle 29 reliée à un palier 31 disposé à distance de l'axe de pivotement 17 de l'obturateur concerné 11, 13 ou 15.

Pour éviter toute ouverture intempestive des obturateurs 11, 13 ou 15, par exemple par la force de l'air agissant sur l'obturateur 11, 13 ou 15 en position fermée, le mécanisme bielle-manivelle 27 est configuré de manière à bloquer l'ouverture de l'obturateur 11, 13 ou 15 en position fermée.

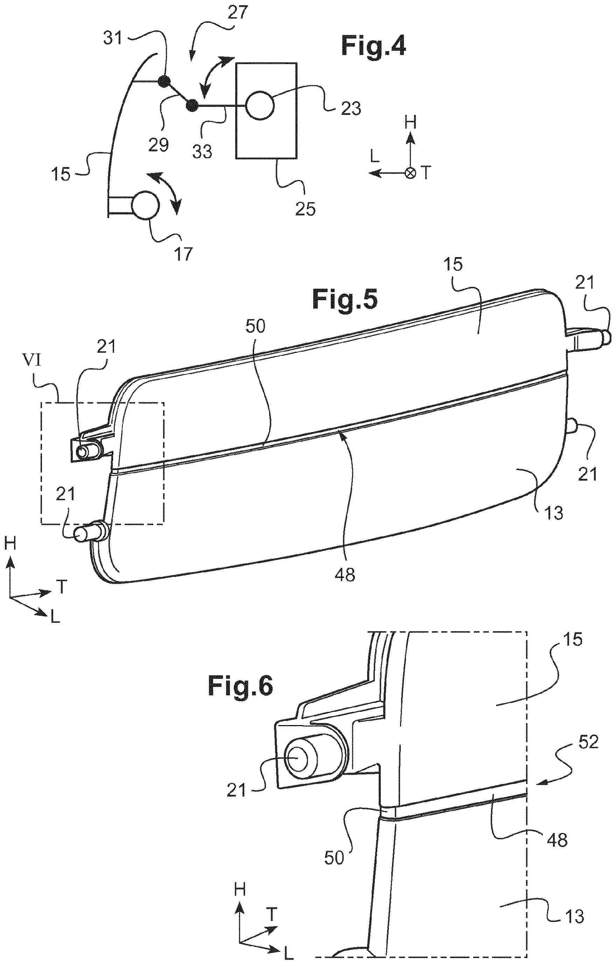

Comme notamment visible sur la figure 4, à cet effet, en position de fermeture de l'obturateur 11, 13 ou 15, la manivelle 33 du mécanisme bielle-manivelle 27 est perpendiculaire à l'obturateur 11, 13 ou 15.

Les figures 5 et 6 montrent deux obturateurs 13 et 15 selon une vue frontale en perspective. Pour parfaire l'étanchéité et l'aspect continuité de surface en position de fermeture des obturateurs 13 et 15 qui sont entraînés par l'intermédiaire de leurs axes rotatifs de commande respectif 23 dans des sens de pivotement antagoniste, au moins un 48 des bords d'un des obturateurs 13 ou 15, destiné à être en vis-à-vis du bord de l'autre obturateur 15 ou 13 présente une lèvre élastique 50.

Cette lèvre 50 est par exemple réalisée en élastomère, caoutchouc ou mousse et peut être fixée sur le bord 48 de l'obturateur 13 ou 15 par collage, encliquetage ou surmoulage.

La lèvre élastique 50 présente une section transversale tronconique dont la base élargie 52 est visible de l'extérieur.

Ainsi, la lèvre élastique assure une continuité de surface entre les deux obturateurs 13 et 15 en position fermée. Bien entendu, la lèvre d'étanchéité 50 ainsi que les obturateurs 11, 13 et 15 et la peau externe 3 ont de préférence la même couleur et le même aspect de surface.

Selon une variante non représentée, le pourtour périphérique de chaque obturateur 11, 13 ou 15 est équipé d'une lèvre élastique 50.

On comprend donc que les obturateurs selon l'invention permettent de réduire l'encombrement selon l'axe longitudinal du véhicule. De plus, en position de fermeture, les obturateurs 11, 13 ou 15 assurent une continuité de surface avec la peau externe 3.

## Revendications

1. Dispositif d'obturation d'une entrée d'air pour véhicule automobile, destiné à équiper notamment un module de face avant (1) et comprenant
- au moins un obturateur (11,13, 15) de l'entrée d'air qui est mobile en pivotement entre d'une part une position de fermeture dans laquelle le ou les obturateurs (11,13, 15) empêchent l'air de passer, et d'autre part une position escamotée dans laquelle l'air peut passer par l'entrée d'air,
- un axe rotatif de commande (23) de l'obturateur (11, 13, 15) qui est décalé de l'axe de pivotement (17) de l'obturateur (11,13, 15),
- un actionneur d'entraînement (25) de l'axe rotatif de commande (23), **caractérisé en ce que** le dispositif comprend
- deux obturateurs (13, 15) destiné à fermer une ouverture d'entrée d'air et **en ce que** les obturateurs (13, 15) sont entraînés par l'intermédiaire de leurs axes rotatifs de commande (23) respectifs dans des sens de pivotement antagonistes.

2. Dispositif selon la revendication 1, **caractérisé en ce que** l'axe rotatif de commande (23) est parallèle à l'axe de pivotement (17).

3. Dispositif selon l'une quelconque des revendications 1 à 2, **caractérisé en ce que** l'obturateur (11,13, 15) possède une forme galbée vers l'extérieur et des tourillons (21) latéraux définissant l'axe de pivotement (17) de l'obturateur (11,13, 15)

4. Dispositif selon l'une quelconque des revendications 1 à 3, **caractérisé en ce qu'**il comprend au moins un mécanisme bielle-manivelle (27) raccordant l'axe rotatif de commande (23) à l'obturateur (11,13, 15) de sorte qu'une rotation de l'axe rotatif de commande (23) déplace l'obturateur (11,13, 15) en pivotement.

5. Dispositif selon la revendication 4, **caractérisé en ce qu'**au moins un mécanisme bielle-manivelle (27) est disposé de façon centrée par rapport à l'obturateur (11,13, 15).

6. Dispositif selon l'une quelconque des revendications 4 à 5, **caractérisé en ce que** ledit mécanisme bielle-manivelle (27) est orienté perpendiculairement à l'axe de pivotement (17) de l'obturateur (11,13, 15) et à l'axe rotatif de commande (23).

7. Dispositif selon l'une quelconque des revendications 4 à 6, **caractérisé en ce que** la bielle (29) du mécanisme bielle-manivelle (27) est reliée à un palier (31) disposé à distance de l'axe de pivotement (17) de l'obturateur (11,13, 15).

8. Dispositif selon l'une quelconque des revendications 4 à 7, caractérisé en ce le mécanisme bielle-manivelle (27) est configuré de manière à bloquer l'ouverture de l'obturateur (11,13, 15) en position fermée.

9. Dispositif selon la revendication 8, **caractérisé en ce qu'**en position de fermeture de l'obturateur (11,13, 15), la manivelle (33) du mécanisme bielle-manivelle (27) est perpendiculaire à l'obturateur (11,13, 15).

10. Dispositif selon l'une quelconque des revendications 1 à 9, **caractérisé en ce que** l'obturateur (11,13, 15) possède une largeur comprise entre 0,6m et 1m et une hauteur comprise entre 10cm et 15cm.

11. Module de face avant (1) pour véhicule automobile comportant
- une peau externe (3) destinée à être montée perpendiculairement à l'axe longitudinal (L) du véhicule, à être visible de l'extérieur du véhicule et présentant une ouverture (7 ; 9) d'entrée d'air,
- au moins un dispositif d'obturation selon l'une quelconque des revendications 1 à 10 ayant au moins un obturateur (11,13, 15) de l'ouverture (7 ; 9) d'entrée d'air, qui en position de fermeture assurent une continuité de surface avec ladite peau externe (3).

## Patentansprüche

1. Abdeckvorrichtung eines Lufteinlasses für ein Kraftfahrzeug, die insbesondere zur Ausrüstung eines Frontmoduls (1) bestimmt ist und
- mindestens eine Abdeckung (11, 13, 15) des Lufteinlasses, die schwenkbeweglich ist zwischen einerseits einer geschlossenen Position, in der die Abdeckung(en) (11, 13, 15) verhindert (verhindern), das Luft hindurchströmt, und andererseits einer zurückgezogenen Position, in der die Luft hindurchströmen kann,
- eine Steuerdrehachse (23) der Abdeckung (11, 13, 15), die von der Schwenkachse (17) der Abdeckung (11, 13, 15) versetzt ist,
- ein Antriebsstellglied (25) der Steuerdrehachse (23) umfasst,
**dadurch gekennzeichnet, dass** die Vorrichtung
- zwei Abdeckungen (13, 15) umfasst, die zum Schließen einer Lufteinlassöffnung (9) bestimmt sind, und dadurch, dass die Abdeckungen (13, 15) mittels ihrer jeweiligen Drehsteuerachsen (23) in antagonistische Schwenkrichtungen angetrieben werden.

2. Vorrichtung nach Anspruch 1, **dadurch gekennzeichnet, dass** die Steuerdrehachse (23) parallel zur Schwenkachse (17) ist.

3. Vorrichtung nach einem der Ansprüche 1 bis 2, **dadurch gekennzeichnet, dass** die Abdeckung (11, 13, 15) eine nach außen gekrümmte Form und seitliche Zapfen (21) aufweist, die die Schwenkachse (17) der Abdeckung (11, 13, 15) definieren.

4. Vorrichtung nach einem der Ansprüche 1 bis 3, **dadurch gekennzeichnet, dass** sie mindestens einen Schubkurbelmechanismus (27) umfasst, der die Steuerdrehachse (23) mit der Abdeckung (11, 13, 15) derart verbindet, dass eine Drehung der Steuerdrehachse (23) die Abdeckung (11, 13, 15) schwenkend bewegt.

5. Vorrichtung nach Anspruch 4, **dadurch gekennzeichnet, dass** mindestens ein Schubkurbelmechanismus (27) in Bezug auf die Abdeckung (11, 13, 15) mittig angeordnet ist.

6. Vorrichtung nach einem der Ansprüche 4 bis 5, **dadurch gekennzeichnet, dass** der Schubkurbelmechanismus (27) senkrecht zur Schwenkachse (17) der Abdeckung (11, 13, 15) und zur Steuerdrehachse (23) ausgerichtet ist.

7. Vorrichtung nach einem der Ansprüche 4 bis 6, **dadurch gekennzeichnet, dass** die Schubstange (29) des Schubkurbelmechanismus (27) mit einem Lager (31) verbunden ist, das von der Schwenkachse (17) der Abdeckung (11, 13, 15) beabstandet angeordnet ist.

8. Vorrichtung nach einem der Ansprüche 4 bis 7, **dadurch gekennzeichnet, dass** der Schubkurbelmechanismus (27) so konfiguriert ist, dass er das Öffnen der Abdeckung (11, 13, 15) in der geschlossenen Position blockiert.

9. Vorrichtung nach Anspruch 8, **dadurch gekennzeichnet, dass** die Kurbel (33) des Schubkurbelmechanismus (27) in der geschlossenen Position der Abdeckung (11, 13, 15) senkrecht zur Abdeckung (11, 13, 15) ist.

10. Vorrichtung nach einem der Ansprüche 1 bis 9, **dadurch gekennzeichnet, dass** die Abdeckung (11, 13, 15) eine Breite zwischen 0,6 m und 1 m und eine Höhe zwischen 10 cm und 15 cm aufweist.

11. Frontmodul (1) für ein Kraftfahrzeug, umfassend
- eine Außenhaut (3), die dazu bestimmt ist, senkrecht zur Längsachse (L) des Fahrzeugs angebracht zu werden, von außen sichtbar zu sein und die eine Lufteinlassöffnung (7; 9) aufweist,
- mindestens eine Abdeckvorrichtung nach einem der Ansprüche 1 bis 10 mit mindestens einer Abdeckung (11, 13, 15) der Lufteinlassöffnung (7; 9), die in der geschlossenen Position eine kontinuierliche Oberfläche mit der Außenhaut (3) bereitstellt.

## Claims

1. Device for shutting off an air inlet for a motor vehicle, intended to equip in particular a front end module (1) and comprising
- at least one air-inlet shutter (11, 13, 15) which is pivotably movable between, on the one hand, a closure position in which the shutter or shutters (11, 13, 15) prevents/prevent the air from passing, and, on the other hand, a retracted position in which the air can pass through the air inlet,
- a rotary control spindle (23) for the shutter (11, 13, 15), which is offset from the pivot axis (17) of the shutter (11, 13, 15),
- a drive actuator (25) for the rotary control spindle (23),
**characterized in that** the device comprises
- two shutters (13, 15) intended to close an air-inlet opening, and **in that** the shutters (13, 15) are driven via their respective rotary control spindles (23) in opposite pivoting directions.

2. Device according to Claim 1, **characterized in that** the rotary control spindle (23) is parallel to the pivot axis (17).

3. Device according to either one of Claims 1 and 2, **characterized in that** the shutter (11, 13, 15) has an outwardly curved shape and lateral journals (21) defining the pivot axis (17) of the shutter (11, 13, 15).

4. Device according to any one of Claims 1 to 3, **characterized in that** it comprises at least one connecting rod-crank mechanism (27) connecting the rotary control spindle (23) to the shutter (11, 13, 15) such that a rotation of the rotary control spindle (23) causes the shutter (11, 13, 15) to pivot.

5. Device according to Claim 4, **characterized in that** at least one connecting rod-crank mechanism (27) is arranged in a centred manner with respect to the shutter (11, 13, 15).

6. Device according to either one of Claims 4 and 5, **characterized in that** the said connecting rod-crank mechanism (27) is oriented perpendicularly to the pivot axis (17) of the shutter (11, 13, 15) and to the rotary control spindle (23).

7. Device according to any one of Claims 4 to 6, **characterized in that** the connecting rod (29) of the connecting rod-crank mechanism (27) is connected to a bearing (31) arranged at a distance from the pivot axis (17) of the shutter (11, 13, 15) .

8. Device according to any one of Claims 4 to 7, **characterized in that** the connecting rod-crank mechanism (27) is configured so as to block the opening of the shutter (11, 13, 15) in the closed position.

9. Device according to Claim 8, **characterized in that**, in the closed position of the shutter (11, 13, 15), the crank (33) of the connecting rod-crank mechanism (27) is perpendicular to the shutter (11, 13, 15).

10. Device according to any one of Claims 1 to 9, **characterized in that** the shutter (11, 13, 15) has a width between 0.6 m and 1 m and a height between 10 cm and 15 cm.

11. Front end module (1) for a motor vehicle comprising
- an outer skin (3) intended to be mounted perpendicularly to the longitudinal axis (L) of the vehicle, to be visible from outside the vehicle and having an air-inlet opening (7; 9),
- at least one shut-off device according to any one of Claims 1 to 10 having at least one shutter (11, 13, 15) for the air-inlet opening (7; 9), which shutter, in the closed position, ensures surface continuity with the said outer skin (3).
